# EUROPÄISCHE PATENTSCHRIFT

(11) **EP 0 819 857 B1**
(45) Veröffentlichungstag und Bekanntmachung des Hinweises auf die Patenterteilung: **29.03.2000**
(21) Anmeldenummer: 97110926.9
(22) Anmeldetag: 02.07.1997
(51) Int. Cl.: F16B 13/00

(54) **Dübelstreifen mit mehreren Dübeln**
Dowel carrier strip with a plurality of dowels
Bande de support de chevilles avec plusieurs chevilles

(30) Priorität: 18.07.1996 DE 29612476 U
(43) Veröffentlichungstag der Anmeldung: 21.01.1998
(73) Patentinhaber: fischerwerke Artur Fischer GmbH & Co. KG, 72178 Waldachtal (DE)
(72) Erfinder: Elger, Dirk, Dipl.-Ing., 72275 Alpirsbach (DE)

(56) Entgegenhaltungen:
- GB-A- 2 284 190

## Beschreibung

Die Erfindung betrifft einen Dübelstreifen mit mehreren an einem schmalen Trägerstreifen abstehenden Dübeln gemäß der Gattung des Anspruchs 1.

Die für den Einsatz in Bohrlöcher bestimmten Dübel werden im Kunststoff-Spritzverfahren üblicherweise nicht einzeln, sondern als Dübelstreifen hergestellt, wobei ein solcher Dübelstreifen einen mittleren, gleichzeitig als Anguß dienenden Trägerstreifen besitzt, an dem zu beiden Seiten jeweils eine Reihe nebeneinanderliegender Dübel absteht. Aus spritzgußtechnischen Gründen haben die Dübel einen Abstand zueinander. Die Verbindung zwischen jedem Dübel und dem Trägerstreifen erfolgt über dünne Anguß- und Verbindungsstege, die Sollbruchstellen darstellen, damit die Dübel leicht vom Trägerstreifen abgebrochen werden können. Ein derartiger Dübelstreifen geht z.B. aus der GB-A-2 284 190 hervor.

Die Dübel können vor dem Verkauf von den Trägerstreifen entfernt und in Schachteln verpackt werden. Es besteht aber auch die Möglichkeit, die Dübelstreifen ohne vorheriges Abtrennen der einzelnen Dübel zu vertreiben.

Der Erfindung liegt die Aufgabe zugrunde, einen Dübelstreifen mit mehreren an einem schmalen Trägerstreifen seitlich angeordneten Dübeln zu schaffen, der mit weiteren Dübelstreifen lösbar aufeinanderliegend verbunden werden kann.

Die Lösung dieser Aufgabe erhält man durch die im Anspruch 1 angegebenen Merkmale. Der Dübelstreifen wird als einstückiges Kunststoffspritzgußteil unter Verwendung eines entsprechenden Werkzeuges hergestellt, so daß die an einem flachen Trägerstreifen in Reihe nebeneinanderliegenden Dübel über dünne Verbindungsstege mit dem Trägerstreifen in an sich bekannter Weise verbunden sind. Der Trägerstreifen besitzt erfindungsgemäß wenigstens ein von einer Flachseite des Trägerstreifens abstehendes Verbindungselement, welches in eine Verbindungsöffnung eines zweiten, aufliegenden Dübelstreifens lösbar eingreift. Dadurch lassen sich zwei oder drei Dübelstreifen flach aufeinanderliegend zu einem Dübelstreifenstapel verbinden, der leicht handhabbar ist und auch einen verhältnismäßig geringen Platzbedarf erfordert.

Besonders vorteilhaft ist es, wenn die Verbindungsöffnungen zu dem Verbindungselement einen Mittenabstand haben, der dem halben Mittenabstand der seitlich abstehenden Dübel entspricht. Dadurch wird erreicht, daß die aufeinandergestapelten Dübelstreifen so aufeinanderliegen, daß die Dübel aufeinanderliegender Streifen auf Lücke versetzt ausgerichtet sind, wodurch eine hohe Packungsdichte erreicht wird.

Das Verbindungselement ist vorzugsweise ein bügelförmiger Zapfen, der an seinem oberen Ende kleine Rastvorsprünge aufweisen kann. Auf diesen Zapfen kann ein flaches Halteelement so aufgesteckt werden, daß ein Teil des Halteelements zwischen dem zusammengestapelten und miteinander lösbar verbundenen Dübelstreifen gehalten wird. Das Halteelement kann eine Halteöffnung besitzen, mit der die anhängenden mehreren Dübelstreifen beispielsweise in einem Verkaufsregal ohne zusätzliche Verpackung direkt aufgehängt werden können.

Die Erfindung wird nachfolgend anhand eines in der Zeichnung dargestellten Ausführungsbeispiels näher erläutert.

Es zeigen:
Figur 1 die Draufsicht auf einen Dübelstreifen mit zu beiden Seiten seitlich abstehenden Dübeln,
Figur 2 eine stirnseitige Ansicht des Dübelstreifens von Figur 1,
Figur 3 den Schnitt AA durch den Trägerstreifen des Dübelstreifens von Figur 1 und
Figur 4 den Dübelstreifen mit einem aufgesteckten Halteelement.

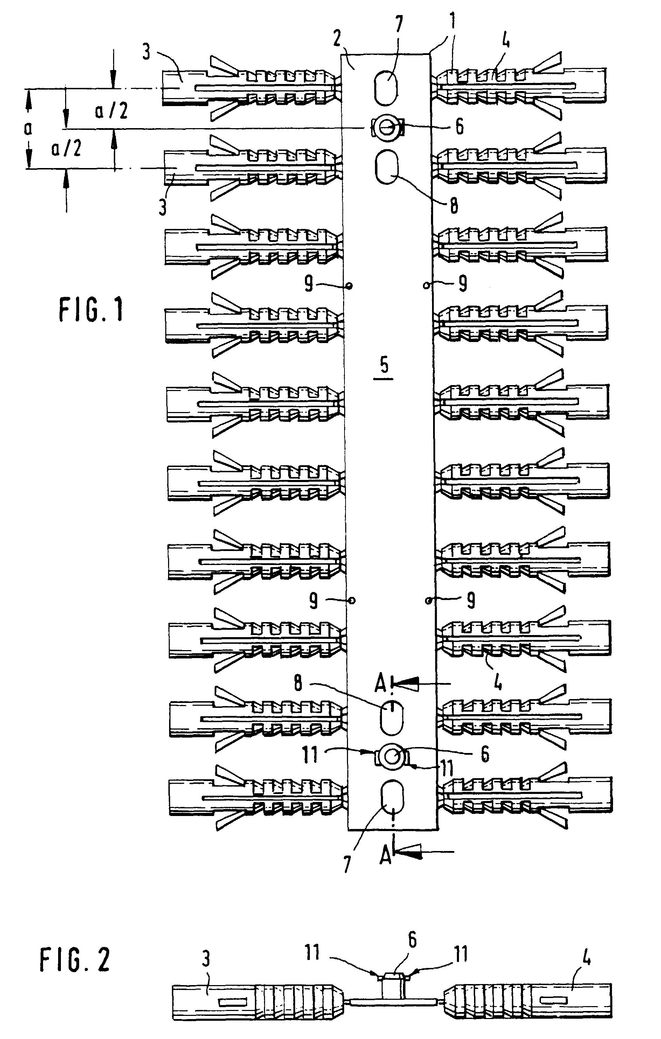

Der in Figur 1 dargestellte Dübelstreifen 1 besteht aus einem in der Mitte verlaufenden Trägerstreifen 2 und aus mehreren an diesem seitlich abstehenden Dübeln 3, 4. Die Dübel 3 bilden dabei die links am Trägerstreifen abstehende Reihe von im Abstand zueinander benachbarten Dübeln, während die Dübel 4 eine solche rechts am Trägerstreifen 2 abstehende Reihe von Dübeln bilden. Die Dübel 3, 4 sind über schmale Stege mit dem Trägerstreifen 2 verbunden, so daß die Dübel durch einfaches Abknicken oder Verdrehen vom Trägerstreifen 2 abgetrennt werden können.

Die Herstellung des Dübelstreifens 1 erfolgt in an sich bekannter Weise im Kunststoff-Spritzgußverfahren mittels eines Spritzwerkzeugs. Der Dübelstreifen 1 wird auf diese Weise als einstückiges Kunststoffteil hergestellt.

Damit mehrere Dübelstreifen 1 übereinanderliegend gestapelt werden können, ist an den Trägerstreifen 2 ein an der in Figur 1 sichtbaren Flachseite 5 abstehendes Verbindungselement 6 vorgesehen, welches lösbar in eine Verbindungsöffnung eines hier nicht dargestellten benachbarten Dübelstreifens rastend eingesteckt werden kann. Der dargestellte Dübelstreifen 1 weist ebenfalls solche Verbindungsöffnungen 7, 8 auf, die den Mittenabstand a/2 jeweils gegenüber dem Verbindungselement 6 haben. Der Abstand a stellt den Mittenabstand zwischen zwei nebeneinanderliegenden Dübeln 3 bzw. 4 dar. Wird nun ein Dübelstreifen auf den vorhandenen Dübelstreifen 1 aufgesetzt, so daß das Verbindungselement 6 des Dübelstreifens 1 in eine Verbindungsöffnung des aufgesetzten Dübelstreifens eingreift, so sind die beiden übereinanderliegenden Dübelstreifen in Längsrichtung um den Abstand a/2 zueinander versetzt, so daß die Dübel des unteren Dübelstreifens gegenüber dem oberen Dübelstreifen auf Lücke angeordnet sind.

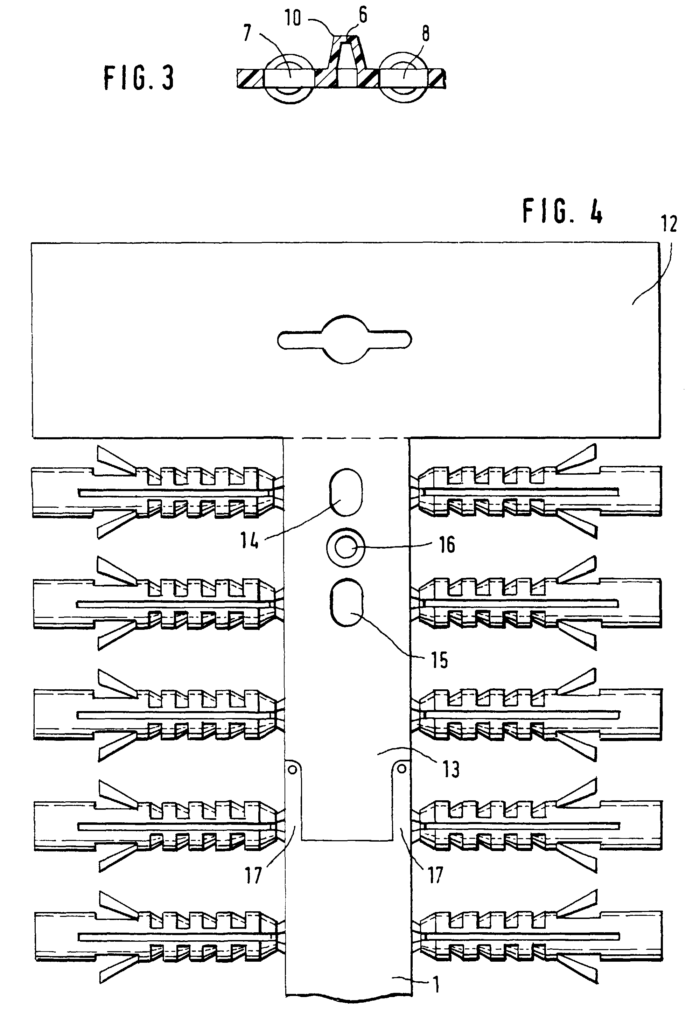

An der sichtbaren Flachseite 5 des Trägerstreifens 2 sind noch Sicherungsstifte 9 ausgebildet, die das in Figur 3 dargestellte Halteelement gegen Verdrehen sichern und die als Abstandselemente zwischen aufeinandergestapelten Dübelstreifen wirken.

In Figur 2 sind insbesondere am Verbindungselement 6 seitlich abstehende Rastränder 11 ersichtlich, die lösbar an einer Verbindungsöffnung eines nicht dargestellten aufliegenden zweiten Dübelstreifens einrasten.

Figur 3 zeigt den Schnitt AA gemäß Figur 1 im Bereich des am unteren Ende des Dübelstreifens 1 angeordneten Verbindungselements 6 und der dazu benachbarten Verbindungsöffnungen 7, 8. Das Verbindungselement 6 ist ein bügelförmiger Zapfen, der am oberen Ende tellerförmig ausgebildet ist. An dem tellerförmigen Ende 10 können senkrecht zur Längsrichtung des Dübelstreifens 2 ausgerichtete Rastränder 11 (Figur 1, 2) so überstehen, daß diese in korrespondierende Verbindungsöffnungen rastend eingreifen.

In Figur 4 ist auf den Dübelstreifen 1, der hier nur im oberen Bereich dargestellt ist, ein Halteelement 12 mit einem schmalen Befestigungsstreifen 13 aufgesteckt. Das Halteelement 12 ist ein flaches Kunststoffteil, wobei dieses jedoch auch aus einem anderen Material hergestellt sein kann. Am Befestigungsstreifen 13 des Halteelements 12 sind Durchgangsöffnungen 14, 15, 16 ausgebildet, die mit den Verbindungsöffnungen 7, 8 und dem Verbindungselement 6 fluchten. Am unteren Ende des Befestigungsstreifens 13 ist dieser seitlich mit Aussparungen 17 versehen, in die die Sicherungsstifte 9 als Drehsicherungselemente eingreifen.

## Patentansprüche

1. Aus Kunststoff hergestellter Dübelstreifen mit mehreren in Reihe nebeneinanderliegenden Dübeln, die an den Schmalseiten eines flachen Trägerstreifens abstehen, **dadurch gekennzeichnet**, daß an dem Trägerstreifen (2) wenigstens ein Verbindungselement (6) an einer seiner Flachseiten (5) absteht und zu diesem in Längsrichtung des Trägerstreifens (2) versetzt wenigstens eine Verbindungsöffnung (7) für die lösbare Aufnahme eines Verbindungselements (6) eines anderen, darunterliegenden Dübelstreifens ausgebildet ist.

2. Dübelstreifen nach Anspruch 1, **dadurch gekennzeichnet**, daß in Längsrichtung zu beiden Seiten des Verbindungselements (6) jeweils eine Verbindungsöffnung (7, 8) ausgebildet ist.

3. Dübelstreifen nach Anspruch 1**, dadurch gekennzeichnet**, daß der Mittenabstand zwischen dem Verbindungselement (6) und einer angrenzenden Verbindungsöffnung (7, 8) gleich dem halben Mittenabstand (a) zwischen zwei nebeneinander am Trägerstreifen (2) abstehenden Dübeln (3) ist.

4. Dübelstreifen nach Anspruch 1, **dadurch gekennzeichnet**, daß das Verbindungselement (6) ein an der Flachseite (5) des Trägerstreifens (2) nach oben abstehender bügelförmiger Zapfen ist.

5. Dübelstreifen nach Anspruch 1, **dadurch gekennzeichnet,** daß ein flaches Halteelement (12) mit einem schmalen, auf das Verbindungselement (6) aufgesteckten Befestigungsstreifen (13) an dem Trägerstreifen (2) lösbar befestigt ist.

6. Dübelstreifen nach Anspruch 5, **dadurch gekennzeichnet,** daß der Befestigungsstreifen (13) mit einem Verbindungselement (6) und den dazu benachbarten Verbindungsöffnungen (7, 8) des Trägerstreifens (2) fluchtende Durchgangsöffnungen (14, 15, 16) hat.

7. Dübelstreifen nach Anspruch 5, **dadurch gekennzeichnet,** daß der Befestigungsstreifen (13) des Halteelements (12) bei zwei aufeinander gestapelten und lösbar miteinander verbunden Dübelstreifen zwischen diesen einliegt.

8. Dübelstreifen nach Anspruch 5, **dadurch gekennzeichnet,** daß an dem Befestigungsstreifen (13) Aussparungen (17) vorgesehen sind, in die am Trägerstreifen (2) abstehende Sicherungsstifte (9) eingreifen.

## Claims

1. Strip of plugs manufactured from plastics, having a plurality of plugs lying adjacent to one another in a row projecting from the narrow sides of a flat carrier strip, characterized in that at least one connecting element (6) projects from one of the faces (5) of the carrier strip (2), and offset relative thereto in the longitudinal direction of the carrier strip (2) there is formed at least one connecting opening (7) for releasably receiving a connecting element (6) of another strip of plugs lying underneath.

2. Strip of plugs according to claim 1, characterized in that a connecting opening (7, 8) is formed in the longitudinal direction on each side of the connecting element (6).

3. Strip of plugs according to claim 1, characterized in that the distance between the connecting element (6) and an adjacent connecting opening (7, 8) is equal to half the distance (a) between two adjacent plugs (3) projecting from the carrier strip (2).

4. Strip of plugs according to claim 1, characterized in that the connecting element (6) is a loop-shaped peg projecting upwards from the face (5) of the carrier strip (2).

5. Strip of plugs according to claim 1, characterized in that a flat holding element (12) having a narrow attachment strip (13) mounted on the connecting element (6) is detachably fastened to the carrier strip (2).

6. Strip of plugs according to claim 5, characterized in that the attachment strip (13) has through openings (14, 15, 16) that are aligned with a connecting element (6) and with the connecting openings (7, 8), adjacent thereto, of the carrier strip (2).

7. Strip of plugs according to claim 5, characterized in that, when two strips of plugs are stacked one on top of the other and are releasably connected to one another, the attachment strip (13) of the holding element (12) lies between them.

8. Strip of plugs according to claim 5, characterized in that openings (17) are provided on the attachment strip (13), into which openings there engage securing pins (9) projecting from the carrier strip (2).

## Revendications

1. Bande support de chevilles fabriquée en plastique avec plusieurs chevilles qui sont situées en rangées l'une à côté de l'autre et saillent sur les côtés étroits d'une bande support plate, caractérisée par le fait que sur la bande support (2) au moins un élément de liaison (6) saille sur l'une de ses faces plates (5) et qu'est formée, décalée par rapport à cet élément de liaison selon la direction longitudinale de la bande support (2), une ouverture de liaison (7) pour recevoir, de façon amovible, un élément de liaison (6) d'une autre bande support de chevilles située par dessous.

2. Bande support de chevilles selon la revendication 1, caractérisée par le fait qu'une ouverture de liaison (7, 8) est formée de chacun des deux côtés, selon la direction longitudinale, de l'élément de liaison (6).

3. Bande support de chevilles selon la revendication 1, caractérisée par le fait que la distance axiale entre l'élément de liaison (6) et une ouverture de liaison voisine (7, 8) est égale à la demi-distance axiale (a) entre deux chevilles (3) saillant l'une à côté de l'autre sur la bande support (2).

4. Bande support de chevilles selon la revendication 1, caractérisée par le fait que l'élément de liaison (6) est un ergot en forme d'arc qui saille vers le haut sur la face plate (5) de la bande de support (2).

5. Bande support de chevilles selon la revendication 1, caractérisée par le fait qu'un élément d'accrochage plat (12) est fixé, de façon amovible, sur la bande support (2) par une étroite bande de fixation (13) enfichée sur l'élément de liaison (6).

6. Bande support de chevilles selon la revendication 5, caractérisée par le fait que la bande de fixation (13) présente des ouvertures de passage (14, 15, 16) qui coïncident avec un élément de liaison (6) et avec les ouvertures de liaison (7, 8), qui en sont voisines, de la bande support (2).

7. Bande support de chevilles selon la revendication 5, caractérisée par le fait que dans le cas de deux bandes support de chevilles empilées l'une sur l'autre et reliées l'une à l'autre de façon détachable, la bande de fixation (13) de l'élément d'accrochage (12) se place entre ces deux bandes support de chevilles.

8. Bande support de chevilles selon la revendication 5, caractérisée par le fait que sur la bande de fixation (13) sont prévues des évidements (17) dans lesquels viennent en prise des picots de sécurité (9) qui saillent sur la bande support (2).
